**Europäisches Patentamt**

**European Patent Office**

**Office européen des brevets**

(19)

(11) Veröffentlichungsnummer: **0 240 869 B1**

## (12) EUROPÄISCHE PATENTSCHRIFT

(45) Veröffentlichungstag der Patentschrift: **23.10.91**

(51) Int. Cl.⁵: **C01B 21/068**

(21) Anmeldenummer: **87104556.3**

(22) Anmeldetag: **27.03.87**

(54) Verfahren zur Herstellung von Siliciumnitrid.

(30) Priorität: **11.04.86 DE 3612162**

(43) Veröffentlichungstag der Anmeldung:
**14.10.87 Patentblatt 87/42**

(45) Bekanntmachung des Hinweises auf die
Patenterteilung:
**23.10.91 Patentblatt 91/43**

(84) Benannte Vertragsstaaten:
**CH DE FR GB LI SE**

(56) Entgegenhaltungen:
**EP-A- 0 080 050**
**DE-A- 2 528 170**
**DE-A- 2 818 545**
**US-A- 4 414 190**

(73) Patentinhaber: **BAYER AG**

**W-5090 Leverkusen 1 Bayerwerk(DE)**

(72) Erfinder: **Schönfelder, Lothar, Dr.**
**Friedensstrasse 235**
**W-4150 Krefeld 11(DE)**
Erfinder: **Franz, Gerhard, Dr.**
**Erich-Klausener-Strasse 44**
**W-4150 Krefeld 1(DE)**

**Beschreibung**

Die vorliegende Erfindung betrifft ein Verfahren zur Herstellung von Siliciumnitrid-Pulver durch Reaktion von Silicium-Sauerstoff-Verbindungen und einem kohlenstoffhaltigen Material in nitridierender Atmosphäre.

Siliciumnitrid-Pulver ist als Rohstoff zur Herstellung von keramischen Werkstoffen für hohe mechanische und thermische Beanspruchungen interessant.

An Siliciumnitrid-Pulver als Rohstoff zur Herstellung von kermischen Werkstoffen für Hochtemperaturanwendungen werden hohe Anforderungen an die chemische Reinheit und an den Gehalt an $\alpha$-Si$_3$N$_4$ gestellt.

Ein hoher Gehalt an metallischen oder nichtmetallischen Verunreinigungen, wie z. B. Sauerstoff oder Kohlenstoff, verschlechtert die Hochtemperatureigenschaften keramischer Si$_3$N$_4$-Werkstoffe.

Ein hohes $\alpha$-/$\beta$-Verhältnis der Si$_3$N$_4$-Rohstoffe begünstigt die Sintereigenschaften und die Ausbildung einer möglichst dichten Mikrostruktur im fertigen Werkstoff.

Die wichtigsten Verfahren zur Herstellung von Siliciumnitrid-Pulver sind:
- die Direktnitridierung von Silicium mit Stickstoff,
- die Umsetzung von SiCl$_4$ mit Ammoniak,
- die carbothermische Nitridierung von SiO$_2$ in Gegenwart von Kohlenstoff.

Von diesen Verfahren ist für eine großtechnische Herstellung die carbothermische Nitridierung von SiO$_2$ besonders interessant.

Bei dem Verfahren der Direktnitridierung von Silicium mit Stickstoff handelt es sich um eine exotherme Reaktion, die eine genaue Steuerung des Reaktionsverlaufes verlangt, um zu Pulvern mit einem hohen Gehalt an $\alpha$-Si$_3$N$_4$ zu gelangen.

Das Verfahren der Umsetzung von SiCl$_4$ mit Ammoniak weist den Nachteil auf, daß teure Rohstoffe, wie SiCl$_4$, eingesetzt werden müssen und neben Siliciumnitrid größere Mengen an Nebenprodukten, wie HCl und NH$_4$Cl, entstehen, so daß dieses Verfahren für die wirtschaftliche Herstellung eines kostengünstigen Siliciumnitrid-Pulvers wenig geeignet ist.

Das Verfahren der carbothermischen Nitridierung besitzt dagegen den Vorteil, daß es aufgrund des gut verfügbaren kostengünstigen SiO$_2$-Rohstoffes und eines einfachen Reaktionsablaufes für eine großtechnische Si$_3$N$_4$-Herstellung besonders interessant ist.

Für eine technische Verwertung besitzt dieses Verfahren jedoch den Nachteil, daß bei Reaktionen zwischen Feststoffen, in diesem Fall SiO$_2$ und Kohlenstoff, und Gasen eine starke Abhängigkeit der Reaktionsgeschwindigkeit von Diffusionsvorgängen besteht. Durch große Schütthöhen der Reaktionsmischungen wird diese Gasdiffusion stark behindert, und die Reaktionsbedingungen werden ungünstig beeinflußt. Dadurch sind bei der carbothermischen Nitridierung lange Reaktionszeiten bei hohen Reaktionstemperaturen notwendig, um ausreichende Nitridierungsraten zu erzielen.

Diese Nachteile zu vermeiden war Gegenstand verschiedener Verfahrensvorschläge.

Die japanische Patentanmeldung JP-A 76/28599 beschreibt ein Verfahren zur Beschleunigung der carbothermischen Nitridierungsreaktion durch Zusätze von Oxiden der Elemente Eisen, Aluminium, Calcium oder Magnesium zu einer Mischung von amorphem SiO$_2$ und Kohlenstoff.

In der EP-A 80050 wird ein Verfahren zur Erhöhung des $\alpha$-Si$_3$N$_4$-Gehaltes durch Zusätze von Verbindungen der Erdalkalielemente oder Übergangselemente beschrieben.

Diese Verfahren sind jedoch nicht zur Herstellung von hochreinem Siliciumnitrid-Pulver geeignet, da durch die zugesetzten Verbindungen die hergestellten Pulver stark verunreinigt werden, vor allem mit Elementen wie Calcium, Eisen oder Aluminium, die die Hochtemperaturfestigkeit von Si$_3$N$_4$-Werkstoffen verschlechtern.

Aus der DE-A-2818545 ist ein Verfahren zur Herstellung von Siliciumnitrid durch Erhitzen eines Gemisches aus Siliciumdioxid und einem kohlenstoffhaltigen Material in einer Stickstoff- und/oder Ammoniakatmosphäre bekannt, wobei zu dem Gemisch inertes Siliciumnitrid zugegeben wird.

Wie die Beispiele zeigen (Tabelle 1), sind für die gewünschten hohen Gehalte $\alpha$-Siliciumnitrid Zusätze von 50 - 75 Gew.-% Siliciumnitrid notwendig, um einen $\alpha$-Gehalt von über 98 % zu erreichen. Durch diesen Zusatz von Siliciumnitrid-pulver in diesen hohen Anteilen wird jedoch die Raum-/Zeitausbeute sehr stark reduziert.

Aus der US-A-4414190 geht weiterhin ein Verfahren hervor, bei dem wiederum als Nachteil die langen Reaktionszeiten mit geringen Si$_3$N$_4$-Ausbeuten bei konventionellen Umsätzen von Siliciumdioxid mit Kohlenstoff angeführt werden. Deshalb werden bei diesem Verfahren Kieselsäuren mit hohen Oberflächen eingesetzt. Bei diesen Kieselsäuren handelt es sich um synthetisch hergestellte, teure SiO$_2$-Rohstoffe. Diese weisen gemäß Anspruch 1 Oberflächen im Bereich von 50 bis 350 m$^2$/g auf. Ein weiterer Nachteil dieser Rohstoffe liegt in ihren niedrigen Schüttgewichten, die in der Regel bei 0,15 bis 0,3 g/cm$^3$ liegen. Dies führt wiederum zu geringen Raum-/Zeitausbeuten.

Die Aufgabe der vorliegenden Erfindung war es somit, ein Verfahren zur Herstellung von Siliciumnitrid zur Verfügung zu stellen, welches die oben beschriebenen Nachteile nicht aufweist.

Überraschenderweise wurde nun gefunden, daß ein Zusatz von Ammoniak zum Stickstoff-Nitridiergas eine starke Beschleunigung der Nitridierungsreaktion bewirkt, ohne daß dadurch Nachteile bezüglich der Produktqualität des Siliciumnitrids in Kauf genommen werden müssen. Erfindungswesentlich ist auch der Einsatz von Quarzmehl.

Gegenstand der vorliegenden Erfindung ist somit ein Verfahren zur Herstellung von Siliciumnitrid-Pulver durch Reaktion von Silicium-Sauerstoff-Verbindungen und einem kohlenstoffhaltigen Material in nitridierender Gasatmosphäre aus Ammoniakgas oder Ammoniakgas/Stickstoffgas-Mischungen ohne Zusatz von Siliciumnitrid bei Temperaturen von 1300 bis 1600° C, wobei als Silicium-Sauerstoff-Verbindungen Quarzmehl mit spezifischen Oberflächen nach BET von 0,1 bis 10 $m^2/g$ eingesetzt wird.

Die BET-Oberfläche wird nach der Stickstoff-1-Punkt-Methode bestimmt. Entscheidend für diese nitridierende und reaktionsbeschleunigte Wirkung des Ammoniakgases ist die erfindungsgemäße Art und Weise, wie es mit der festen Reaktionsmischung aus $SiO_2$ und Kohlenstoff in Kontakt gebracht wird. Wenn nämlich die Nitridierungstemperaturen von 1300 bis 1600° C eingehalten werden, findet nicht die unerwünschte Bildung von Siliciumcarbid statt. Außerdem können nach dem erfindungsgemäßen Verfahren Siliciumnitrid-Pulver mit einem hohen $\alpha$-Phasengehalt hergestellt werden.

Besonders bevorzugt ist die Ausführungsform des erfindungsgemäßen Verfahrens, bei der Temperaturen im Bereich von 1400 bis 1500° C eingehalten werden. Im allgemeinen führen Temperaturen unter 1300° C zu schlechten Nitridierungsraten. Temperaturen über 1560° C führen jedoch zu einer verstärkten Bildung von SiC neben $\beta$-$Si_3N_4$.

Das erfindungsgemäße Verfahren wird vorteilhaft so durchgeführt, daß die nitridierende Atmosphäre 10 bis 100 Vol.-% Ammoniakgas enthält.

Weiterhin wurde gefunden, daß die nitridierende Wirkung des Ammoniak unter den Reaktionsbedingungen besonders gut ist, wenn die Verweilzeiten des Gases in der heißen Reaktionszone bis zum Kontakt mit der Reaktionsmischung sehr klein sind.

Bevorzugt wird daher das erfindungsgemäße Verfahren so durchgeführt, daß die Verweilzeit des Ammoniakgases unter 1 sec liegt. Die bevorzugte Verweilzeit des Ammoniakgases in der Reaktionszone bei Temperaturen über 1400° C liegt zwischen 0,5 und 0,01 sec. Bei höheren Verweilzeiten wird die Bildung von SiC gegenüber $Si_3N_4$ begünstigt.

Das Nitridiergas, bestehend aus Ammoniak oder aus Ammoniak-Stickstoff-Mischungen, kann über keramische Gaseinleitungsrohre aus $Si_3N_4$, SiC oder $Al_2O_3$ oder aus Metallen wie z. B. Molybdän mit hohen Strömungsgeschwindigkeiten und damit kleinen Verweilzeiten in der heißen Zone direkt über die Reaktionsmischung geleitet werden.

Eine besonders bevorzugte Ausführungsform besteht darin, daß das ammoniakhaltige Gas über zwei konzentrisch angeordnete Rohre eingeleitet wird, wobei der Ringspalt zwischen Außen- und Innenrohr mit einem Inertgasstrom, bevorzugt Stickstoffgas, gekühlt wird.

Die Rohstoffe für die Herstellung der Siliciumnitrid-Pulver werden nach bekannten Verfahren gemischt. Das molare Verhältnis zwischen Kohlenstoff und der eingesetzten Siliciumverbindung sollte dabei über dem stöchiometrischen Verhältnis von 2 : 1 liegen. Günstig für hohe Nitridierungsraten und einen hohen Gehalt an $\alpha$-$Si_3N_4$ ist ein Überschuß an Kohlenstoff, vorteilhaft die zwei- bis dreifache stöchiometrische Menge.

Als Kohlenstoffquelle sind insbesondere Ruße, Graphit und/ oder karbonisierbare organische Verbindungen geeignet.

Es ist empfehlenswert zur Erreichung guter Produktqualitäten, daß im Anschluß an die Nitridierungsreaktion zur Elimination von Kohlenstoff das Reaktionsprodukt in einer oxidierenden Atmosphäre bei 600 bis 800° C geglüht wird.

Da das erfindungsgemäße Verfahren ohne katalytische Zusätze in fester Form eine starke Reaktionsbeschleunigung erzielt, ist das danach hergestellte Siliciumnitrid-Pulver nicht durch fremde Zusätze verunreinigt. Die chemische Reinheit des Pulvers wird daher nur durch die eingesetzten Rohstoffe bestimmt. Durch Verwendung hochreiner Quarzsorten oder z. B. Hydrolysaten organischer Halogen-Silicium-Verbindungen und handelsüblicher hochreiner Gasruße können entsprechend hochreine Siliciumnitrid-Pulver hergestellt werden.

Das erfindungsgemäße Verfahren wird in den anschließenden Beispielen näher beschrieben, ohne daß darin eine Einschränkung der Erfindung zu sehen ist.

Beispiele 1 - 5

Quarzfeinstmehl (spezifische Oberfläche BET = 4,5 $m^2$ /g) und Ruß (spezifische Oberfläche BET =

EP 0 240 869 B1

110 m²/g) wurden im molaren Verhältnis von 1 : 6 trocken gemischt und unter Zugabe eines Bindemittels auf Polyvinylalkoholbasis granuliert. Durch Sieben wurde eine Fraktion mit 1 bis 4 mm Korndurchmesser erhalten. Diese Mischung wurde bei 1000 °C in einen Drehbirnenofen eingebracht und in einer Stunde auf 1480 °C aufgeheizt; während der Aufheizphase wurde die Reaktionsmischung unter Stickstoffgas gehalten. Nach Erreichen der Nenntemperatur wurde 2 h in einer Stickstoffatmosphäre mit verschiedenen Ammoniakgehalten (Bsp. 1 bis 4) nitridiert. Im Vergleichsbeispiel 5 wurde in reiner Stickstoffatmosphäre ohne Ammoniakzusatz nitridiert. Die Gesamtgasmenge betrug 50 1/h. Die Verweilzeit des Gases in der beheizten Zone betrug 0,07 Sekunden. Nach der Nitridierung wurde der überschüssige Kohlenstoff durch Glühen bei 800 °C an Luft eliminiert und der jeweilige Umsetzungsgrad zu $Si_3N_4$ bestimmt (Tabelle 1).

Tabelle 1

| Beispiel | $NH_3$ im Nitridiergas (Vol.-%) | Umsatz zu $Si_3N_4$ (%) |
|---|---|---|
| 1 | 30 | 39 |
| 2 | 50 | 62 |
| 3 | 80 | 75 |
| 4 | 100 | 84 |
| 5 (Vergleichsbsp.) | 0 | 16 |

Beispiele 6 - 10

Eine Reaktionsmischung wie in den Versuchsbeispielen 1 bis 5 wurde in einer $N_2$-$NH_3$-Atmosphäre bei einem Mischungsverhältnis der Gase von 1 : 1 für 2 h nitridiert. In Tabelle 2 sind die Umsetzungsgrade und der Gehalt an SiC, bestimmt aus dem nicht ausbrennbaren Kohlenstoff, angegeben.

Tabelle 2

| Beispiel | Reaktionstemperatur (°C) | Umsatz zu zu $Si_3N_4$ (%) | Gehalt an SiC (%) |
|---|---|---|---|
| 6 | 1450 | 29 | 2,0 |
| 7 | 1475 | 83 | 4,2 |
| 8 | 1500 | 92 | 4,1 |
| 9 | 1525 | 83 | 12,4 |
| 10 (Vergleichsbeispiel) | 1500 | 21 | 0,7 |

Im Vergleichsbeispiel 10 wurde ohne Ammoniakzusatz in reiner Stickstoffatmosphäre nitridiert.

Beispiele 11 - 15

Die Reaktionsmischung, hergestellt wie in den Beispielen 1 bis 10, wurde unter den in Tabelle 3 angegebenen Bedingungen nitridiert und der Umsetzungsgrad, der Kohlen stoffgehalt des $Si_3N_4$-Pulvers und der Gehalt an $\alpha$-$Si_3N_4$ bestimmt.

Der Gehalt an $\alpha$-$Si_3N_4$ wurde durch Röntgenbeugung über das Intensitätsverhältnis

$$\alpha\text{-}Si_3N_4 \ (\%) = \frac{\alpha\text{-}(102) + \alpha\text{-}(210)}{\alpha\text{-}(102) + \alpha\text{-}(210) + \beta\text{-}(101) + \beta\text{-}(210)} \times 100$$

berechnet.

4

**Tabelle 3**

| Beispiel | Reaktions-temperatur (°C) | Reaktions-zeit (h) | Ammoniakgas in Nitridiergas (Vol.-%) | Umsatz zu $Si_3N_4$ (%) | $\alpha$-$Si_3N_4$ (%) | Kohlenstoff-gehalt (%) |
|---|---|---|---|---|---|---|
| 11 | 1480 | 2 | 100 | 94 | 98,4 | 0,3 |
| 12 | 1480 | 6 | 0 | 76 | 81,5 | 1,2 |
| 13 | 1500 | 2 | 50 | 93 | 96,0 | 0,6 |
| 14 | 1500 | 6 | 0 | 83 | 88,1 | 2,8 |
| 15 | 1525 | 2 | 50 | 83 | 98,8 | 12,4 |

**Patentansprüche**

1. Verfahren zur Herstellung von Siliciumnitrid-Pulver durch Reaktion von Silicium-Sauerstoff-Verbindungen und einem kohlenstoffhaltigen Material in nitridierender Gasatmosphäre aus Ammoniakgas oder Ammoniakgas/Stickstoffgas-Mischungen ohne Zusatz von Siliciumnitrid bei Temperaturen von 1300 bis 1600° C, dadurch gekennzeichnet, daß als Silicium-Sauerstoff-Verbindungen Quarzmehl mit spezifischen Oberflächen nach BET von 0,1 bis 10 m²/g eingesetzt wird.

2. Verfahren gemäß Anspruch 1, dadurch gekennzeichnet, daß Temperaturen im Bereich von 1400 bis 1560° C eingehalten werden.

3. Verfahren gemäß einem der Ansprüche 1 oder 2, dadurch gekennzeichnet, daß die nitridierende Atmosphäre 10 bis 100 Vol.-% Ammoniakgas enthält.

4. Verfahren gemäß einem der Ansprüche 1 bis 3, dadurch gekennzeichnet, daß die Verweilzeit des Ammoniakgases unter 1 sec. liegt.

5. Verfahren nach Anspruch 4, dadurch gekennzeichnet, daß die Verweilzeit bei Temperaturen über 1400° C zwischen 0,5 und 0,01 sec. liegt.

6. Verfahren gemäß einem der Ansprüche 1 bis 5, dadurch gekennzeichnet, daß das ammoniakhaltige Gas über zwei konzentrisch angeordnete Rohre eingeleitet wird, wobei der Ringspalt zwischen Außen- und Innenrohr mit einem Inertgasstrom, bevorzugt Stickstoffgas, gekühlt wird.

7. Verfahren gemäß einem der Ansprüche 1 bis 6, dadurch gekennzeichnet, daß im Anschluß an die Nitridierungsreaktion zur Elimination von Kohlenstoff das Reaktionsprodukt in einer oxidierenden Atmosphäre bei 600 bis 800° C geglüht wird.

## Claims

1. A process for the production of silicon nitride powder by reaction of silicon-oxygen compounds and a carbon-containing material in a nitriding gas atmosphere of ammonia gas or ammonia gas/nitrogen gas mixtures without addition of silicon nitride at temperatures of 1,300 to 1,600° C, characterized in that silica flour having a specific BET surface of 0.1 to 10 m²/g is used as the silicon-oxygen compound.

2. A process as claimed in claim 1, characterized in that it is carried out at temperature of 1,400 to 1,560° C.

3. A process as claimed in claim 1 or 2, characterized in that the nitriding atmosphere contains 10 to 100% by volume ammonia gas.

4. A process as claimed in any of claims 1 to 3, characterized in that the residence time of the ammonia gas is less than 1 second.

5. A process as claimed in claim 4, characterized in that the residence time at temperatures above 1,400° C is between 0.5 and 0.01 second.

6. A process as claimed in any of claims 1 to 5, characterized in that the ammonia-gas is introduced through two concentrically arranged tubes, the annular gap between the outer tube and the inner tube being cooled with an inert gas stream, preferably of nitrogen gas.

7. A process as claimed in any of claims 1 to 6, characterized in that, after the nitriding reaction, the reaction product is calcined in an oxidizing atmosphere at 600 to 800° C to eliminate carbon.

## Revendications

1. Procédé de préparation d'une poudre de nitrure de silicium par réaction de composés du silicium et de l'oxygène avec une matière carbonée dans une atmosphère gazeuse nitrurante d'ammoniac ou de mélanges d'ammoniac et d'azote sans addition de nitrure de silicium, à des températures de 1 300 à 1 600° C, caractérisé en ce qu'on utilise comme composés du silicium et de l'oxygène une poudre de quartz présentant des surfaces spécifiques BET de 0,1 à 10 m²/g.

2. Procédé selon la revendication 1, caractérisé en ce que l'on maintient des températures situées dans la plage de 1 400 à 1 560° C.

3. Procédé selon l'une des revendications 1 ou 2, caractérisé en ce que l'atmosphère nitrurante contient 10 à 100% en volume d'ammoniac.

4. Procédé selon l'une des revendications 1 à 3, caractérisé en ce que le temps de séjour de l'ammoniac est inférieur à 1 s.

5. Procédé selon la revendication 4, caractérisé en ce que, pour des températures supérieures à 1 400° C, le temps de séjour est compris entre 0,5 et 0,01 s.

6. Procédé selon l'une des revendications 1 à 5, caractérisé en ce que le gaz contenant de l'ammoniac est introduit par l'intermédiaire de deux tubes concentriques, la fente annulaire entre le tube externe et le tube interne étant refroidie par un courant de gaz inerte, de préférence l'azote.

7. Procédé selon l'une des revendications 1 à 6, caractérisé en ce qu'à la suite de la réaction de nitruration le produit de la réaction est carbonisé entre 600 et 800° C dans une atmosphère oxydante pour éliminer le carbone.